# EUROPEAN PATENT SPECIFICATION

(11) **EP 4 497 612 B1**
(45) Date of publication and mention of the grant of the patent: **05.11.2025**
(21) Application number: 24184200.4
(22) Date of filing: 25.06.2024
(51) Int. Cl.: B60C 11/13, B60C 11/03, B60C 11/12

(54) **TIRE**
REIFEN
PNEUMATIQUE

(30) Priority: 24.07.2023 JP 2023120194
(43) Date of publication of application: 29.01.2025
(73) Proprietor: SUMITOMO RUBBER INDUSTRIES, LTD., Kobe-shi, Hyogo 651-0072 (JP)
(72) Inventor: TANIGUCHI, HIDETOSHI, Kobe-shi, 651-0072 (JP)
(74) Representative: Forresters IP LLP

(56) References cited:
- EP-A1- 0 520 755
- JP-A- 2018 008 586
- RU-C1- 2 489 267
- US-A- 3 664 402

## Description

### BACKGROUND OF THE INVENTION

### Field of the Invention

The present invention relates to a tire.

### Background Art

Japanese Laid-Open Patent Publication No. 2018-8586 discloses a tire including shoulder main grooves. Each shoulder main groove has an inner groove wall and an outer groove wall. An angle of each of the inner groove wall and the outer groove wall relative to a tread normal line in a groove cross-section periodically increases and decreases in a tire circumferential direction, such that a concave wall portion away from a groove center of the shoulder main groove and a convex wall portion approaching the groove center of the shoulder main groove are alternately provided in the tire circumferential direction.

RU 2489267 discloses a tire comprising two circumferential main grooves extending along a tire circumferential direction in a zigzag shape. A wall of the inside circumferential main groove includes wall surfaces with a wall angle varying along the circumferential direction.

EP 0520755 discloses a tire provided with three or more zigzag grooves extending in the tire-circumferential direction.

US 3664402 discloses a tire tread formed with circumferential zigzag ribs bordered by circumferential zigzag grooves, wherein lateral walls of the ribs have a variable inclination with respect to the perpendicular to the tread.

In the tire of Japanese Laid-Open Patent Publication No. 2018-8586, uneven wear is likely to occur on a shoulder land portion on the outer side in a tire axial direction of the shoulder main groove.

The present invention has been made in view of the above-described problem, and the main object of the present invention is to provide a tire capable of improving uneven wear resistance of a shoulder land portion.

### SUMMARY OF THE INVENTION

A tire includes a tread portion, wherein the tread portion includes a first tread end, and a plurality of circumferential grooves continuously extending in a tire circumferential direction, the plurality of circumferential grooves include a first shoulder circumferential groove disposed closest to the first tread end, the first shoulder circumferential groove includes an outer groove edge located on the first tread end side, an outer groove wall extending inward in a tire radial direction from the outer groove edge, an inner groove edge located on a side opposite to the outer groove edge, and an inner groove wall extending inward in the tire radial direction from the inner groove edge, the outer groove edge and the inner groove edge linearly extend parallel to the tire circumferential direction, the outer groove wall extends in the tire circumferential direction without changing an inclination angle relative to a tread normal line passing through the outer groove edge, the inner groove wall extends in the tire circumferential direction while changing an inclination angle relative to a tread normal line passing through the inner groove edge, and the inclination angle of the inner groove wall periodically increases and decreases.

As a result of employing the above configuration, the tire of the present invention can improve uneven wear resistance.

### BRIEF DESCRIPTION OF THE DRAWINGS

FIG. 1 is a partial plan view of a tread portion of a tire according to one embodiment of the present invention;
FIG. 2(A) is a cross-sectional view taken along an A-A line in FIG. 1;
FIG. 2(B) is a cross-sectional view taken along a B-B line in FIG. 1;
FIG. 3 is a plan view of the tread portion;
FIG. 4 is a plan view of a crown circumferential groove;
FIG. 5(A) is a cross-sectional view taken along a C-C line in FIG. 3;
FIG. 5(B) is a cross-sectional view taken along a D-D line in FIG. 3;
FIG. 6 is a plan view of a first shoulder land portion and a first crown land portion; and
FIG. 7 is a cross-sectional view taken along an E-E line in FIG. 3.

### DETAILED DESCRIPTION

Hereinafter, one embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

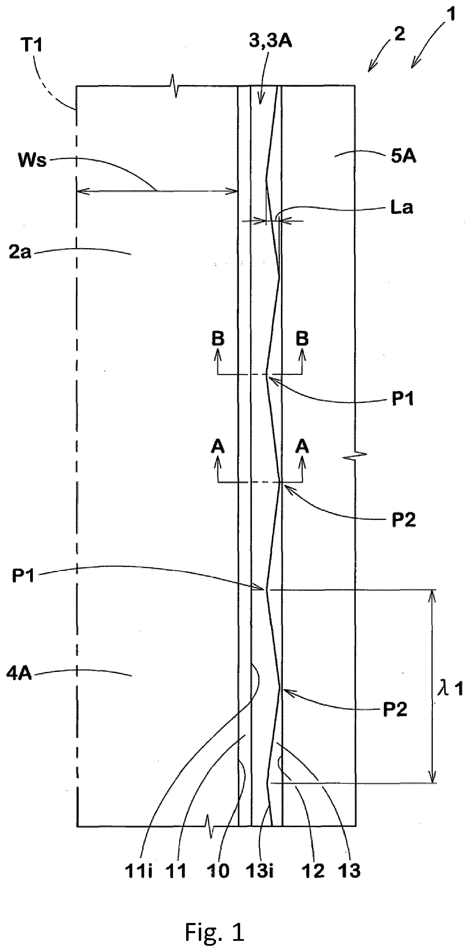

FIG. 1 is a partial plan view of a tread portion 2 of a tire 1 showing one embodiment of the present invention. The present invention is applied to a pneumatic tire for a passenger car, more specifically, a tire for a commercial vehicle which is expected to be used under a relatively high load. However, the present invention may be applied to a pneumatic tire for a light truck or a heavy-duty vehicle, or a non-pneumatic tire the interior of which is not filled with pressurized air.

In the present specification, unless otherwise specified, dimensions and the like of components of the tire 1 are values measured in a standardized state. The "standardized state" refers to a state in which the tire 1 is fitted on a standardized rim (not shown) and is inflated to a standardized internal pressure and no load is applied to the tire 1 when the tire 1 is a pneumatic tire.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 includes a first tread end T1, and a plurality of circumferential grooves 3 continuously extending in a tire circumferential direction. The plurality of circumferential grooves 3 include a first shoulder circumferential groove 3A disposed closest to the first tread end T1.

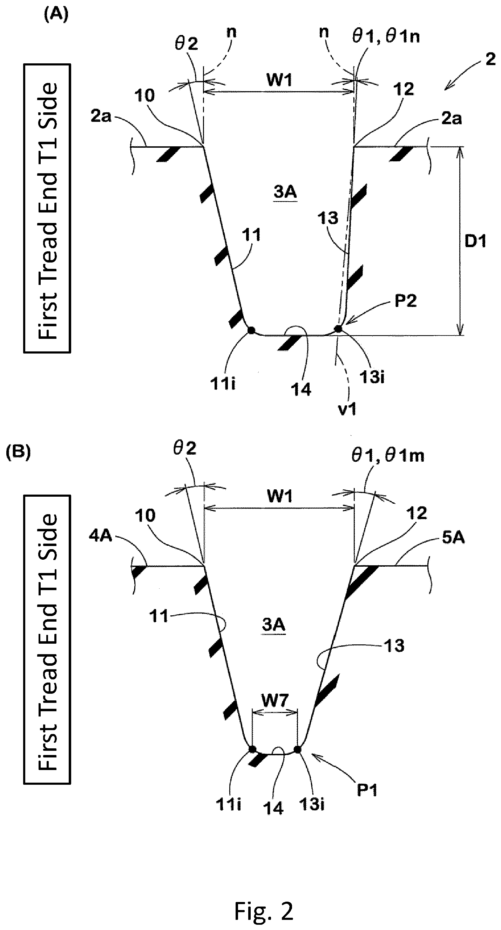

FIG. 2(A) is a cross-sectional view taken along an A-A line in FIG. 1. FIG. 2(B) is a cross-sectional view taken along a B-B line in FIG. 1. As shown in FIG. 1, FIG. 2(A), and FIG. 2(B), the first shoulder circumferential groove 3A includes an outer groove edge 10, an outer groove wall 11, an inner groove edge 12, and an inner groove wall 13. The outer groove edge 10 is a groove edge located on the first tread end T1 side. The outer groove wall 11 extends inward in a tire radial direction from the outer groove edge 10. The inner groove edge 12 is a groove edge located on a side opposite to the outer groove edge 10. The inner groove edge 12 is more separated from the first tread end T1 than the outer groove edge 10. The inner groove wall 13 extends inward in the tire radial direction from the inner groove edge 12. In the present specification, each "groove edge" is formed at a position where a tread surface 2a of the tread portion 2 intersects with the groove wall.

The tread surface 2a is an outer surface of the tread portion 2 which comes into contact with a flat surface, in a state (standardized load-applied state) in which a standardized load is applied to the tire 1 in the standardized state and the tire 1 is brought into contact with the flat surface at a camber angle of 0°. The "standardized load" is a load that is defined, in a standard system including a standard on which the tire 1 is based, by the standard for each tire. Thus, the standardized load is, for example, the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The outer groove edge 10 and the inner groove edge 12 linearly extend parallel to the tire circumferential direction. With such a first shoulder circumferential groove 3A, land portion stiffness around the outer groove edge 10 and the inner groove edge 12 is ensured and basic uneven wear resistance is exerted.

During straight running, relatively great contact pressure acts on a land portion (first crown land portion 5A described below) forming the inner groove wall 13. Thus, the inner groove wall 13 of the present invention extends in the tire circumferential direction while changing an inclination angle θ1 relative to a tread normal line n passing through the inner groove edge 12. In addition, the inclination angle θ1 of the inner groove wall 13 periodically increases and decreases. With such an inner groove wall 13, the base of the first crown land portion 5A forming the inner groove wall 13 is widened at a portion where the inclination angle θ1 increases, to inhibit movement (deformation) during running (especially, during straight running), so that uneven wear resistance is improved. In addition, if movement during running is inhibited, rolling resistance performance, and wear life performance which means resistance to wear can also be improved. Further, with the inner groove wall 13, reduction in the groove volume of the first shoulder circumferential groove 3A is inhibited at a portion where the inclination angle θ1 decreases, thereby maintaining wet performance. In a cross-section parallel to a groove width direction of the first shoulder circumferential groove 3A, the inclination angle θ1 is specified by a virtual straight line v1 passing through the inner groove edge 12 and an inner edge 13i in the tire radial direction of the inner groove wall 13. Inclination angles θ2, θ3 described below are also defined in the same manner.

A maximum value θ1m of the inclination angle θ1 is preferably not less than 20 degrees and more preferably not less than 25 degrees, and is preferably not greater than 35 degrees and more preferably not greater than 30 degrees. In addition, a minimum value θ1n of the inclination angle θ1 is preferably not less than 5 degrees and more preferably not less than 10 degrees, and is preferably not greater than 20 degrees and more preferably not greater than 15 degrees. Since the minimum value θ1n is not less than 5 degrees, the base of the first crown land portion 5A can be widened to inhibit movement during running, and uneven wear resistance, wear life performance, and rolling resistance performance can be enhanced. Since the maximum value θ1m is not greater than 35 degrees, the groove volume of the first shoulder circumferential groove 3A is ensured, and wet performance can be maintained at a high level. In addition, since the difference (θ1m-θ1n) between the maximum value θ1m and the minimum value θ1n is not greater than 30 degrees, uneven wear resistance can be improved even during cornering. In the present specification, regarding the inclination angle θ1, a direction in which the inner groove wall 13 is inclined on the first tread end T1 side toward the inner side in the tire radial direction is defined as being positive.

During cornering, great lateral force acts on a land portion (first shoulder land portion 4A described below) forming the outer groove wall 11. Thus, the outer groove wall 11 of the present invention extends in the tire circumferential direction without changing the inclination angle θ2 relative to a tread normal line n passing through the outer groove edge 10. Accordingly, contact pressure applied on the outer groove wall 11 of the first shoulder land portion 4A is equalized and the occurrence of uneven wear due to lateral force can be suppressed, so that uneven wear resistance can be enhanced. In addition, such an outer groove wall 11 allows water to smoothly flow, thereby maintaining wet performance at a high level.

The inclination angle θ2 is preferably not less than 0 degrees and more preferably not less than 5 degrees, and is preferably not greater than 20 degrees and more preferably not greater than 15 degrees. Since the inclination angle θ2 is not less than 0 degrees, the occurrence of uneven wear on the first shoulder land portion 4A can be suppressed. Since the inclination angle θ2 is not greater than 20 degrees, water in the first shoulder circumferential groove 3A can be smoothly drained. In the present specification, regarding the inclination angle θ2, a direction in which the outer groove wall 11 is inclined on the first tread end T side toward the outer side in the tire radial direction is defined as being positive.

The first shoulder circumferential groove 3A includes an inner edge 11i in the tire radial direction of the outer groove wall 11, the inner edge 13i in the tire radial direction of the inner groove wall 13, and a groove bottom 14 connecting the inner edge 11i and the inner edge 13i. The inner edge 11i and the inner edge 13i are respectively at a position where the outer groove wall 11 intersects with the groove bottom 14 and a position where the inner groove wall 13 intersects with the groove bottom 14. In a case where the outer groove wall 11 and the groove bottom 14 or the inner groove wall 13 and the groove bottom 14 are connected so as to form an arc, the inner edge 11i or the inner edge 13i is specified at the midpoint in the tire radial direction of the arc with the smallest radius of curvature. The groove bottom 14 includes a position where the length in the tire radial direction (groove depth) of the first shoulder circumferential groove 3A is maximum. A width W7 in a tire axial direction of the groove bottom 14 is 40% to 70% of a groove width W1 of the first shoulder circumferential groove 3A.

The inner edge 13i of the inner groove wall 13 includes a first position P1 where the inner edge 13i is most separated from the inner groove edge 12 in the tire axial direction, and a second position P2 where the inner edge 13i is closest to the inner groove edge 12 in the tire axial direction. In the present embodiment, the first position P1 and the second position P2 are alternately arranged in the tire circumferential direction.

The inner edge 13i of the inner groove wall 13 extends in a zigzag or wavy pattern so as to protrude alternately inward and outward in the tire axial direction. The inner edge 13i of the present embodiment extends in a zigzag pattern. In addition, the inner edge 13i has a one-wavelength λ1 of a zigzag or wavy pattern. The one-wavelength λ1 is specified by a separation distance in the tire circumferential direction between the first positions P1 adjacent to each other in the tire circumferential direction, or a separation distance in the tire circumferential direction between the second positions P2 adjacent to each other in the tire circumferential direction. In addition, the inner edge 11i of the outer groove wall 11 linearly extends parallel to the tire circumferential direction.

A distance La in the tire axial direction between the first position P1 and the second position P2 is preferably not less than 0.2 times and more preferably not less than 0.25 times the groove width W1 of the first shoulder circumferential groove 3A, and is preferably not greater than 0.4 times and more preferably not greater than 0.35 times the groove width W1 of the first shoulder circumferential groove 3A. Since the distance La in the tire axial direction is not less than 0.2 times the groove width W1 of the first shoulder circumferential groove 3A, stones stuck into the first shoulder circumferential groove 3A tend to be moved in the tire circumferential direction and be removed. Since the distance La in the tire axial direction is not greater than 0.4 times the groove width W1 of the first shoulder circumferential groove 3A, water in the first shoulder circumferential groove 3A can be smoothly drained.

The one-wavelength λ1 is preferably not less than 3.0 times and more preferably not less than 3.5 times the groove width W1 of the first shoulder circumferential groove 3A, and is preferably not greater than 6.0 times and more preferably not greater than 5.5 times the groove width W1 of the first shoulder circumferential groove 3A. Since the one-wavelength λ1 is not less than 3.0 times the groove width W1, the effect of widening the base of the land portion can be enhanced. Since the one-wavelength λ1 is not greater than 6.0 times the groove width W1, drainage resistance in the first shoulder circumferential groove 3A can be reduced.

For example, the groove width W1 of the first shoulder circumferential groove 3A is preferably not less than 20% and more preferably not less than 25% of a land portion width Ws of the first shoulder land portion 4A, and is preferably not greater than 40% and more preferably not greater than 35% of the land portion width Ws of the first shoulder land portion 4A. A groove depth D1 of the first shoulder circumferential groove 3A is preferably not less than 7 mm and more preferably not less than 9 mm, and is preferably not greater than 15 mm and more preferably not greater than 13 mm.

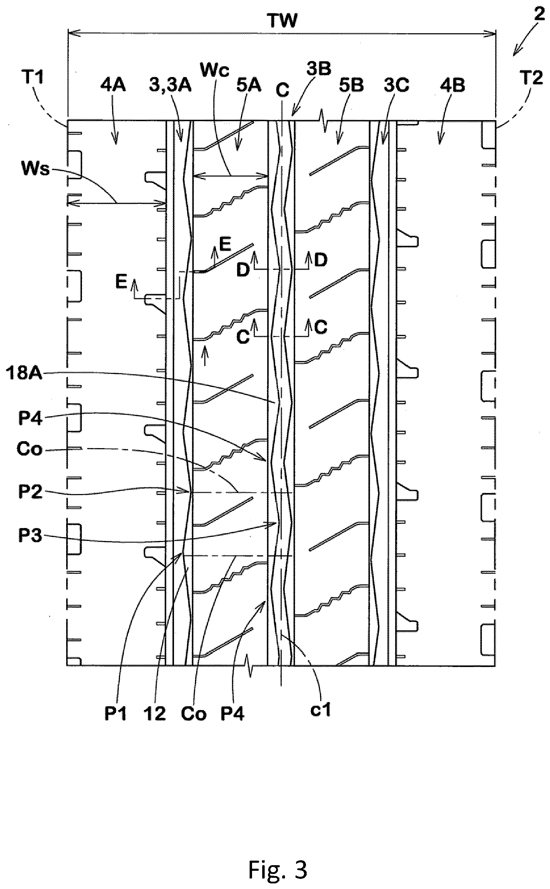

FIG. 3 is a plan view of the tread portion 2. As shown in FIG. 3, the tread portion 2 of the present embodiment further includes a second tread end T2. In addition, the circumferential grooves 3 include a crown circumferential groove 3B adjacent to the first shoulder circumferential groove 3A, and a second shoulder circumferential groove 3C located between the crown circumferential groove 3B and the second tread end T2. The tread portion 2 of the present invention is not limited to a mode in FIG. 3.

Each of the first tread end T1 and the second tread end T2 is a ground contact position on the outermost side in the tire axial direction which comes into contact with the flat surface in the standardized load-applied state. The distance in the tire axial direction between the first tread end T1 and the second tread end T2 is defined as a tread width TW.

The tread portion 2 includes the first shoulder land portion 4A, the second shoulder land portion 4B, the first crown land portion 5A, and the second crown land portion 5B. The first shoulder land portion 4A is located between the first shoulder circumferential groove 3A and the first tread end T1. The second shoulder land portion 4B is located between the second shoulder circumferential groove 3C and the second tread end T2. The first crown land portion 5A is located between the crown circumferential groove 3B and the first shoulder circumferential groove 3A. The second crown land portion 5B is located between the crown circumferential groove 3B and the second shoulder circumferential groove 3C.

The crown circumferential groove 3B extends on a tire equator C, for example. A groove width center line c1 of the crown circumferential groove 3B of the present embodiment is located on the tire equator C. The first shoulder circumferential groove 3A and the second shoulder circumferential groove 3C are separated from the tire equator C in the tire axial direction by the same distance, for example.

The tread portion 2 of the present embodiment has a point-symmetric pattern with any point on the tire equator C as the center of symmetry. Thus, in the present specification, the description of the first shoulder land portion 4A and the first crown land portion 5A is made, but the description of the second shoulder land portion 4B and the second crown land portion 5B is omitted. In addition, the second shoulder circumferential groove 3C has the same configuration as the first shoulder circumferential groove 3A, and thus the description thereof is omitted.

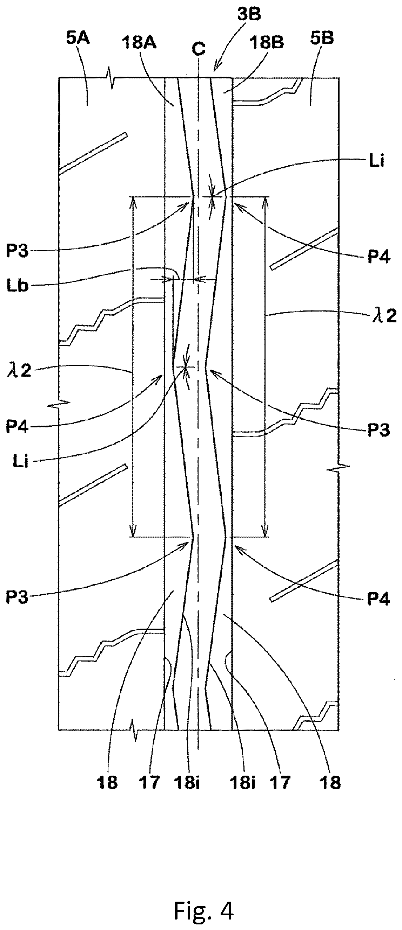

FIG. 4 is an enlarged plan view of the crown circumferential groove 3B. As shown in FIG. 4, the crown circumferential groove 3B includes a pair of groove edges 17, 17, and a pair of groove walls 18, 18 respectively extending inward in the tire radial direction from the pair of groove edges 17, 17.

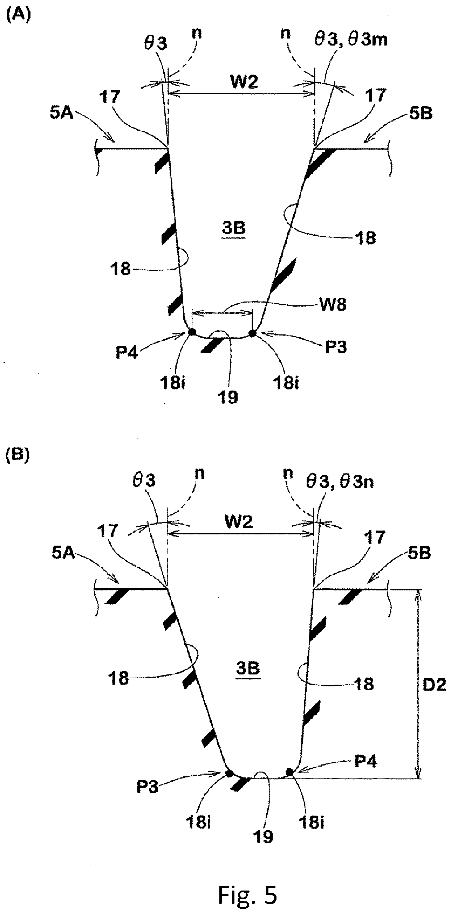

FIG. 5(A) is a cross-sectional view taken along a C-C line in FIG. 3. FIG. 5(B) is a cross-sectional view taken along a D-D line in FIG. 3. As shown in FIG. 4, FIG. 5(A), and FIG. 5(B), the crown circumferential groove 3B includes inner edges 18i in the tire radial direction of the pair of groove walls 18, 18, and a groove bottom 19 connecting the pair of inner edges 18i. The inner edges 18i are at positions where the groove walls 18 intersect with the groove bottom 19. In a case where the groove wall 18 and the groove bottom 19 are connected so as to form an arc, the inner edge 18i is specified at the midpoint in the tire radial direction of the arc with the smallest radius of curvature. The groove bottom 19 includes a position where the length in the tire radial direction (groove depth) of the crown circumferential groove 3B is maximum.

The pair of groove edges 17, 17 of the present embodiment linearly extend parallel to the tire circumferential direction. Such a crown circumferential groove 3B ensures the stiffness of the crown land portions 5A, 5B forming the groove edges 17 to enhance uneven wear resistance.

The pair of groove walls 18, 18 each extend in the tire circumferential direction while changing the inclination angle θ3 relative to a tread normal line n passing through each groove edge 17. The inclination angle θ3 of each of the pair of groove walls 18 periodically increases and decreases. With such groove walls 18, the bases of the crown land portions 5A, 5B are each widened at a portion where the inclination angle θ3 increases, to inhibit movement (deformation) during running (especially, during straight running), so that uneven wear resistance is improved. In addition, if movement during running is inhibited, rolling resistance performance and wear life performance can also be improved.

A maximum value θ3m of the inclination angle θ3 is preferably not less than 20 degrees and more preferably not less than 25 degrees, and is preferably not greater than 35 degrees and more preferably not greater than 30 degrees. In addition, a minimum value θ3n of the inclination angle θ3 is preferably not less than 5 degrees and more preferably not less than 10 degrees, and is preferably not greater than 20 degrees and more preferably not greater than 15 degrees. Further, a difference (θ3m-θ3n) between the maximum value θ3m and the minimum value θ3n is preferably 0 degrees to 30 degrees. Accordingly, both uneven wear resistance, wear life performance, and rolling resistance performance, and wet performance can be achieved. In the present specification, regarding the inclination angle θ3, a direction in which the groove wall 18 is inclined on the outer side in the tire axial direction toward the outer side in the tire radial direction is defined as being positive.

The inner edge 18i of each of the pair of groove walls 18, 18 includes a third position P3 where the inner edge 18i is most separated from the groove edge 17 in the tire axial direction, and a fourth position P4 where the inner edge 18i is closest to the groove edge 17 in the tire axial direction. In the present embodiment, the third position P3 and the fourth position P4 are alternately arranged on each inner edge 18i in the tire circumferential direction.

The inner edge 18i of each of the pair of groove walls 18, 18 extends in a zigzag or wavy pattern so as to protrude alternately inward and outward in the tire axial direction. The inner edge 18i of the present embodiment extends in a zigzag pattern. In addition, the inner edge 18i has a one-wavelength λ2 of a zigzag or wavy pattern. The one-wavelength λ2 is specified by a separation distance in the tire circumferential direction between the third positions P3 adjacent to each other in the tire circumferential direction, or a separation distance in the tire circumferential direction between the fourth positions P4 adjacent to each other in the tire circumferential direction.

A distance Lb in the tire axial direction between the third position P3 and the fourth position P4 is preferably not less than 0.15 times and more preferably not less than 0.20 times a groove width W2 of the crown circumferential groove 3B, and is preferably not greater than 0.35 times and more preferably not greater than 0.30 times the groove width W2 of the crown circumferential groove 3B. Since the distance Lb in the tire axial direction is not less than 0.15 times the groove width W2 of the crown circumferential groove 3B, the bases of the crown land portions 5A, 5B can each be locally widened, and uneven wear resistance and rolling resistance performance can be enhanced. Since the distance Lb in the tire axial direction is not greater than 0.35 times the groove width W2 of the crown circumferential groove 3B, reduction in the groove volume of the crown circumferential groove 3B can be inhibited.

The pair of groove walls 18, 18 include a first groove wall 18A located on the first crown land portion 5A side, and a second groove wall 18B facing the first groove wall 18A.

The third position P3 of the first groove wall 18A and the fourth position P4 of the second groove wall 18B are located at the same position in the tire circumferential direction. In addition, the fourth position P4 of the first groove wall 18A and the third position P3 of the second groove wall 18B are located at the same position in the tire circumferential direction. With such a first groove wall 18A and such a second groove wall 18B, a groove width W8 of the groove bottom 19 has a uniform size in the tire circumferential direction, thereby maintaining smooth water flow. The "the same position in the tire circumferential direction" includes a case where a distance Li in the tire circumferential direction between the fourth position P4 of one of the groove walls 18 and the third position P3 of the other of the groove walls 18 is not greater than 10% of the one-wavelength λ2, and also includes a case where a distance Li in the tire circumferential direction between the third position P3 of the one of the groove walls 18 and the fourth position P4 of the other of the groove walls 18 is not greater than 10% of the one-wavelength λ2.

In addition, as shown in FIG. 3, the first position P1 is a position, in the tire circumferential direction, different from the third position P3 of the first groove wall 18A and the fourth position P4 of the first groove wall 18A, for example. In the present embodiment, the first position P1 is located at a middle Co in the tire circumferential direction between the third position P3 of the first groove wall 18A and the fourth position P4 of the first groove wall 18A. Thus, a point (first position P1) where the land portion stiffness of the inner groove wall 13 greatly varies in the tire circumferential direction is separated, in the tire circumferential direction, from points (third position P3, fourth position P4) where the land portion stiffness of the first groove wall 18A greatly varies in the tire circumferential direction. Accordingly, the stiffness in the tire axial direction of the first crown land portion 5A is equalized in the tire circumferential direction, and thus uneven wear resistance, wear life performance, and rolling resistance performance are improved.

Further, the second position P2 is a position, in the tire circumferential direction, different from the third position P3 of the first groove wall 18A and the fourth position P4 of the first groove wall 18A. The second position P2 is located at the middle Co in the tire circumferential direction between the third position P3 of the first groove wall 18A and the fourth position P4 of the first groove wall 18A. Accordingly, the above-described effect is effectively exerted.

As shown in FIG. 5(A) and FIG. 5(B), for example, the groove width W2 of the crown circumferential groove 3B is preferably not less than 30% and more preferably not less than 35% of a land portion width Wc of the first crown land portion 5A, and is preferably not greater than 45% and more preferably not greater than 40% of the land portion width Wc of the first crown land portion 5A. A groove depth D2 of the crown circumferential groove 3B is preferably not less than 7 mm and more preferably not less than 9 mm, and is preferably not greater than 15 mm and more preferably not greater than 13 mm.

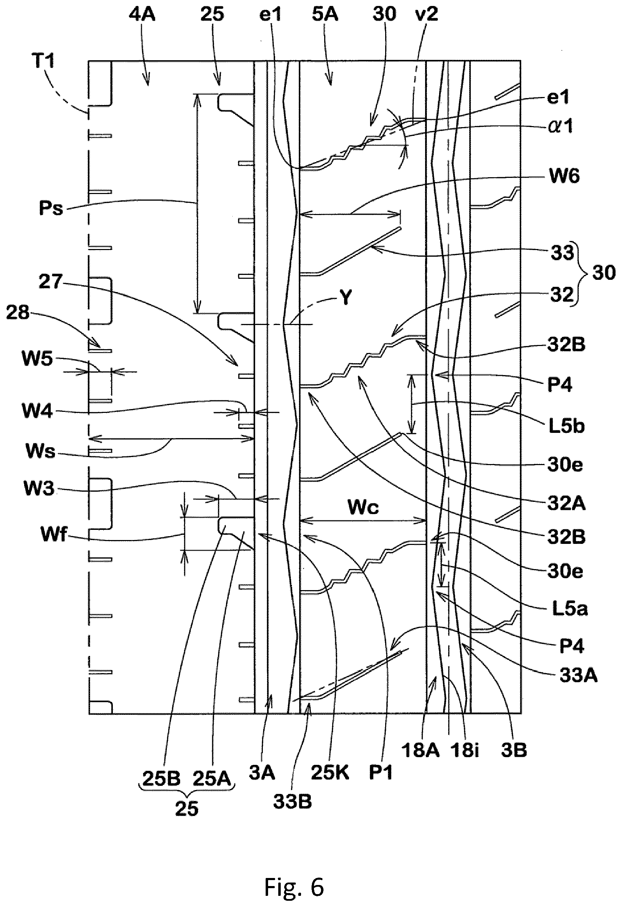

FIG. 6 is a plan view of the first shoulder land portion 4A and the first crown land portion 5A. As shown in FIG. 6, the first shoulder land portion 4A includes a plurality of shoulder lateral grooves 25 with opening ends 25k connected to the first shoulder circumferential groove 3A.

Each of the opening ends 25k of the shoulder lateral grooves 25 is provided at a position overlapping the first position P1 along the tire circumferential direction. With such an opening end 25k, stones caught at the first position P1 where stone-trapping is likely to occur are easily removed and stone-trapping is less likely to occur. In addition, at the first position P1, the apparent stiffness, of the first shoulder land portion 4A, which is locally reduced due to each opening end 25k is enhanced to improve wear life performance and uneven wear resistance. In the present specification, as for the "position overlapping", a tire axial line Y passing through the first position P1 only has to overlap the opening end 25k.

A pitch length Ps in the tire circumferential direction of the shoulder lateral grooves 25 adjacent to each other in the tire circumferential direction is the same as the one-wavelength λ1 (shown in FIG. 1). In other words, the number of shoulder lateral grooves 25 arranged is equal to the number of first positions P1 arranged. Accordingly, stone-trapping is less likely to occur in the first shoulder circumferential groove 3A, and an effect of enhancing the apparent stiffness of the first shoulder land portion 4A is highly exerted.

In the present embodiment, each shoulder lateral groove 25 includes a narrowing width portion 25A with the opening end 25k, and an equal width portion 25B connected to the narrowing width portion 25A. The narrowing width portion 25A has a length, in the tire circumferential direction, continuously decreasing from the opening end 25k toward the first tread end T1, for example. The equal width portion 25B is formed so as to have a uniform length, in the tire circumferential direction, from an inner end in the tire axial direction of the narrowing width portion 25A toward an inner side in the tire axial direction. The shape of the shoulder lateral groove 25 is not limited to such a mode.

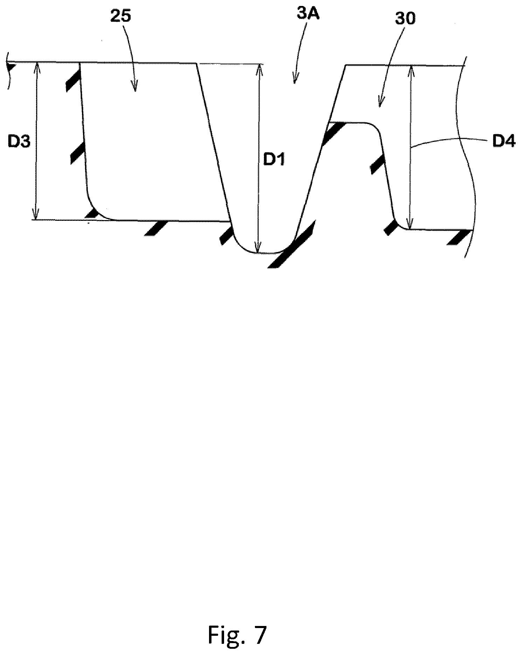

FIG. 7 is a cross-sectional view taken along an E-E line in FIG. 3. As shown in FIG. 6 or FIG. 7, a length W3 in the tire axial direction of each shoulder lateral groove 25 is preferably not less than 0.1 times and more preferably not less than 0.2 times the land portion width Ws of the first shoulder land portion 4A, and is preferably not greater than 0.5 times and more preferably not greater than 0.4 times the land portion width Ws of the first shoulder land portion 4A. In addition, a groove depth D3 of each shoulder lateral groove 25 is preferably not less than 0.1 times and more preferably not less than 0.5 times the groove depth D1 of the first shoulder circumferential groove 3A, and is preferably not greater than 1.0 times and more preferably not greater than 0.9 times the groove depth D1 of the first shoulder circumferential groove 3A. A maximum length Wf in the tire circumferential direction of each shoulder lateral groove 25 is preferably not less than 0.1 times and more preferably not less than 0.2 times the pitch length Ps in the tire circumferential direction of the shoulder lateral grooves 25, and is preferably not greater than 0.5 times and more preferably not greater than 0.4 times the pitch length Ps in the tire circumferential direction of the shoulder lateral grooves 25. With such a shoulder lateral groove 25, wet performance is enhanced and excessive reduction in the stiffness of the first shoulder land portion 4A is inhibited.

The first shoulder land portion 4A further includes a plurality of first shoulder sipes 27 connected to the first shoulder circumferential groove 3A, and second shoulder sipes 28 connected to the first tread end T1. Such sipes 27, 28 scratch and drain water on a road surface, thereby enhancing wet performance. In the present embodiment, the first shoulder sipes 27 and the second shoulder sipes 28 each have an end terminating within the first shoulder land portion 4A. In the present specification, a sipe refers to a cut element having a small width and having a width of less than 1.5 mm between two inner walls extending substantially parallel to and so as to face each other, and is clearly distinguished from a groove having a groove width of 1.5 mm or larger. The width of the sipe is preferably 0.4 to 1.3 mm and more preferably 0.5 to 1.0 mm.

Twisting is likely to occur on the first shoulder land portion 4A on which relatively great lateral force acts. Thus, the first shoulder sipes 27 and the second shoulder sipes 28 are each a straight sipe in the present embodiment. Accordingly, uneven wear can be inhibited from occurring on the first shoulder land portion 4A. On the other hand, for example, if 3D sipes are formed on the first shoulder land portion 4A, due to the twisting, such sipes are likely to cause catching or sliding on a road surface, resulting in uneven wear. No sipe or lateral groove traversing the first shoulder land portion 4A is provided at the first shoulder land portion 4A. The straight sipe refers to a sipe that linearly extends in the tire radial direction and the tire axial direction. The 3D sipe refers to a sipe that extends in a zigzag pattern in the tire radial direction and the axial direction. In the present specification, "extends in the tire radial direction and the tire axial direction" includes a mode of being inclined relative to the tire radial direction and being inclined relative to the tire axial direction.

A length W4 in the tire axial direction of each first shoulder sipe 27 and a length W5 in the tire axial direction of each second shoulder sipe 28 are formed so as to be smaller than the length W3 of the shoulder lateral groove 25. Such a first shoulder sipe 27 and such a second shoulder sipe 28 have an effect of inhibiting wear from occurring on the first shoulder land portion 4A. The length W4 of the first shoulder sipe 27 and the length W5 of the second shoulder sipe 28 are preferably not less than 0.4 times and more preferably 0.5 times the length W3 of the shoulder lateral groove 25, and are preferably not greater than 0.8 times and more preferably not greater than 0.7 times the length W3 of the shoulder lateral groove 25. In addition, in the present embodiment, the length W5 in the tire axial direction of the second shoulder sipe 28 is formed so as to be larger than the length W4 in the tire axial direction of the first shoulder sipe 27.

The first crown land portion 5A includes a plurality of sipes (crown sipes) 30 extending in the tire axial direction. Such crown sipes 30 also have basic wet performance.

An end 30e, closest to the first groove wall 18A side, of each crown sipe 30 is preferably separated from the fourth position P4 of the first groove wall 18A in the tire circumferential direction, by 25% or more of the one-wavelength λ2 (shown in FIG. 4) of the inner edge 18i of the first groove wall 18A. Accordingly, the fourth position P4 and the end 30e where the stiffness of the first crown land portion 5A is locally reduced are separated from each other, and thus great reduction in the stiffness to be caused by approach of the end 30e to the fourth position P4 can be inhibited.

The crown sipes 30 include first crown sipes 32 traversing the first crown land portion 5A, and second crown sipes 33 terminating within the first crown land portion 5A. In other words, the ends 30e of the first crown sipes 32 are connected to the crown circumferential groove 3B, and the ends 30e of the second crown sipes 33 are located in the first crown land portion 5A. The first crown sipes 32 have relatively high wet performance. The second crown sipes 33 serve to inhibit excessive reduction in the stiffness of the first crown land portion 5A.

Each first crown sipe 32 includes an inclined portion 32A inclined relative to the tire axial direction, and a pair of end portions 32B located on both sides of the inclined portion 32A. The inclined portion 32A is formed as, for example, a 3D sipe. In the present embodiment, the inclined portion 32A extends across a middle position in the tire axial direction of the first crown land portion 5A. The pair of end portions 32B are formed as, for example, straight sipes. One of the end portions 32B has one end connected to the first shoulder circumferential groove 3A, and extends parallel to the tire axial direction. The other of the end portions 32B has one end connected to the crown circumferential groove 3B, and extends parallel to the tire axial direction. The pair of end portions 32B each have a smaller length in the tire axial direction than the inclined portion 32A, for example.

Each second crown sipe 33 includes an inclined portion 33A inclined relative to the tire axial direction, and an end portion 33B connecting the inclined portion 33A and the first shoulder circumferential groove 3A. In the present embodiment, the inclined portion 33A and the end portion 33B are formed as straight sipes. In the present embodiment, the inclined portion 33A extends across a middle position in the tire axial direction of the first crown land portion 5A. The end portion 33B extends parallel to the tire axial direction, for example.

The first crown sipes 32 including 3D sipes serve to more inhibit reduction in the apparent stiffness of the first crown land portion 5A than the second crown sipes 33 formed only of straight sipes. Thus, a distance L5a in the tire circumferential direction between the end 30e of the first crown sipe 32 and the fourth position P4 of the first groove wall 18A is preferably smaller than a distance L5b in the tire circumferential direction between the end 30e of the second crown sipe 33 and the fourth position P4 of the first groove wall 18A. Accordingly, reduction in the stiffness of the first crown land portion 5A around each fourth position P4 can be further inhibited.

A length W6 in the tire axial direction of each crown sipe 30 is preferably not less than 0.6 times and more preferably not less than 0.8 times the land portion width Wc of the first crown land portion 5A, and is preferably not greater than 1 times and more preferably not greater than 0.9 times the land portion width Wc of the first crown land portion 5A. A maximum depth D4 of each crown sipe 30 as shown in FIG. 7 is preferably not less than 0.2 times and more preferably not less than 0.8 times the groove depth D1 of the first shoulder circumferential groove 3A, and is preferably not greater than 1 times and more preferably not greater than 0.9 times the groove depth D1 of the first shoulder circumferential groove 3A. An angle α1 of each crown sipe 30 relative to the tire axial direction is preferably not less than 30 degrees and more preferably not less than 40 degrees, and is preferably not greater than 60 degrees and more preferably not greater than 50 degrees. The angle α1 is specified by a virtual straight line v2 connecting both ends e1, e1 in the tire axial direction of the crown sipe 30.

Although not particularly limited, the land portion width Ws of the first shoulder land portion 4A is preferably not less than 15% and more preferably not less than 20% of the tread width TW, and is preferably not greater than 35% and more preferably not greater than 30% of the tread width TW. The land portion width Wc of the first crown land portion 5Ais preferably not less than 75% and more preferably not less than 80% of the land portion width Ws of the first shoulder land portion 4A, and is preferably not greater than 90% and more preferably not greater than 85% of the land portion width Ws of the first shoulder land portion 4A.

Although the particularly preferred embodiment of the present invention has been described in detail above, the present invention is not limited to the above-described embodiment, and various modifications can be made to implement the present invention within the scope of the appended claims.

## Claims

1. A tire (1) comprising a tread portion (2), wherein
the tread portion (2) includes a first tread end (T1), and a plurality of circumferential grooves (3) continuously extending in a tire circumferential direction,
the plurality of circumferential grooves (3) include a first shoulder circumferential groove (3A) disposed closest to the first tread end (T1),
the first shoulder circumferential groove (3A) includes an outer groove edge (10) located on the first tread end (T1) side, an outer groove wall (11) extending inward in a tire radial direction from the outer groove edge (10), an inner groove edge (12) located on a side opposite to the outer groove edge (10), and an inner groove wall (13) extending inward in the tire radial direction from the inner groove edge (12),
the outer groove edge (10) and the inner groove edge (12) linearly extend parallel to the tire circumferential direction,
the inner groove wall (13) extends in the tire circumferential direction while changing an inclination angle (θ1) relative to a tread normal line (n) passing through the inner groove edge (12), and
the inclination angle (θ1) of the inner groove wall (13) periodically increases and decreases,
**characterized in that** the outer groove wall (11) extends in the tire circumferential direction without changing an inclination angle (θ2) relative to a tread normal line (n) passing through the outer groove edge (10).

2. The tire (1) according to claim 1, wherein
the tread portion (2) includes a first shoulder land portion (4A) between the first tread end (T1) and the first shoulder circumferential groove (3A),
the first shoulder land portion (4A) includes a plurality of shoulder lateral grooves (25) with opening ends (25k) connected to the first shoulder circumferential groove (3A),
an inner edge (13i) in the tire radial direction of the inner groove wall (13) extends in a zigzag or wavy pattern so as to protrude alternately inward and outward in a tire axial direction,
the inner edge (13i) includes a first position (P1) where the inner edge (13i) is most separated from the inner groove edge (12) in the tire axial direction, and
each of the opening ends (25k) is provided at a position overlapping the first position (P1) along the tire circumferential direction.

3. The tire (1) according to claim 1 or 2, wherein
a length (W3) in the tire axial direction of each of the plurality of shoulder lateral grooves (25) is 0.1 to 0.5 times a land portion width (Ws) of the first shoulder land portion (4A),
a groove depth (D3) of each of the plurality of shoulder lateral grooves (25) is not less than 0.1 times a groove depth (D1) of the first shoulder circumferential groove (3A), and
a maximum length (Wf) in the tire circumferential direction of each of the plurality of shoulder lateral grooves (25) is 0.1 to 0.5 times a pitch length (Ps) in the tire circumferential direction of the shoulder lateral grooves (25) adjacent to each other in the tire circumferential direction.

4. The tire (1) according to any one of claims 1 to 3, wherein
the plurality of circumferential grooves (3) further include a crown circumferential groove (3B) adjacent to the first shoulder circumferential groove (3A),
the crown circumferential groove (3B) includes a pair of groove edges (17), and a pair of groove walls (18) respectively extending inward in the tire radial direction from the pair of groove edges (17),
the pair of groove edges (17) linearly extend parallel to the tire circumferential direction,
the pair of groove walls (18) each extend in the tire circumferential direction while changing an inclination angle (θ3) relative to a tread normal line (n) passing through each groove edge (17), and
the inclination angle (θ3) of each of the pair of groove walls (18) periodically increases and decreases.

5. The tire (1) according to claim 4, wherein
an inner edge (18i) in the tire radial direction of each of the pair of groove walls (18) extends in a zigzag or wavy pattern so as to protrude alternately inward and outward in the tire axial direction,
the inner edge (18i) of each of the pair of groove walls (18) includes a third position (P3) where the inner edge (18i) is most separated from the groove edge (17) in the tire axial direction, and a fourth position (P4) where the inner edge (18i) is closest to the groove edge (17) in the tire axial direction, and
a distance (Lb) in the tire axial direction between the third position (P3) and the fourth position (P4) is 0.3 to 0.7 times a groove width (W2) of the crown circumferential groove (3B).

6. The tire (1) according to claim 5, wherein
the tread portion (2) includes a first crown land portion (5A) between the crown circumferential groove (3B) and the first shoulder circumferential groove (3A),
the pair of groove walls (18) of the crown circumferential groove (3B) include a first groove wall (18A) located on the first crown land portion (5A) side,
the inner edge (18i) of each of the pair of groove walls (18) has a one-wavelength (λ2) of the zigzag or wavy pattern,
the first crown land portion (5A) includes a plurality of sipes (30) extending in the tire axial direction, and
an end (30e), closest to the first groove wall (18A) side, of each of the plurality of sipes (30) is separated from the fourth position (P4) of the first groove wall (18A) in the tire circumferential direction, by 25% or more of the one-wavelength (λ2) of the inner edge (18i) of the first groove wall (18A).

7. The tire (1) according to claim 6, wherein
a length (W6) in the tire axial direction of each of the plurality of sipes (30) is not less than 0.6 times a land portion width (Wc) of the first crown land portion (5A),
a depth (D4) of each of the plurality of sipes (30) is not less than 0.2 times the groove depth (D1) of the first shoulder circumferential groove (3A), and
an angle (α1) of each of the plurality of sipes (30) relative to the tire axial direction is 30 to 60 degrees.

8. The tire (1) according to claim 6 or 7, wherein
the pair of groove walls (18) of the crown circumferential groove (3B) include a second groove wall (18B) facing the first groove wall (18A),
the third position (P3) of the first groove wall (18A) and the fourth position (P4) of the second groove wall (18B) are located at the same position in the tire circumferential direction, and
the fourth position (P4) of the first groove wall (18A) and the third position (P3) of the second groove wall (18B) are located at the same position in the tire circumferential direction.

9. The tire (1) according to any one of claims 6 to 8, wherein
an inner end in the tire radial direction of the inner groove wall (13) includes a first position (P1) where the inner edge (13i) is most separated from the inner groove edge (12) in the tire axial direction, and a second position (P2) where the inner edge (13i) is closest to the inner groove edge (12) in the tire axial direction,
the first position (P1) is a position, in the tire circumferential direction, different from the third position (P3) of the first groove wall (18A) and the fourth position (P4) of the first groove wall (18A), and
the second position (P2) is a position, in the tire circumferential direction, different from the third position (P3) of the first groove wall (18A) and the fourth position (P4) of the first groove wall (18A).

10. The tire (1) according to claim 9, wherein
the first position (P1) is located at a middle (Co) in the tire circumferential direction between the third position (P3) of the first groove wall (18A) and the fourth position (P4) of the first groove wall (18A), and
the second position (P2) is located at the middle (Co) in the tire circumferential direction between the third position (P3) of the first groove wall (18A) and the fourth position of the first groove wall (18A).

## Patentansprüche

1. Reifen (1), umfassend einen Laufflächenabschnitt (2), wobei
der Laufflächenabschnitt (2) ein erstes Laufflächenende (T1) und eine Vielzahl von Umfangsrillen (3), die sich kontinuierlich in einer Reifenumfangsrichtung erstrecken, einschließt,
die Vielzahl von Umfangsrillen (3) eine erste Schulterumfangsrille (3A) einschließt, die dem ersten Laufflächenende (T1) am nächsten angeordnet ist,
die erste Schulterumfangsrille (3A) eine äußere Rillenkante (10), die sich auf der Seite des ersten Laufflächenendes (T1) befindet, eine äußere Rillenwand (11), die sich von der äußeren Rillenkante (10) in einer Reifenradialrichtung nach innen erstreckt, eine innere Rillenkante (12), die sich auf einer der äußeren Rillenkante (10) gegenüberliegenden Seite befindet, und eine innere Rillenwand (13), die sich von der inneren Rillenkante (12) in der Reifenradialrichtung nach innen erstreckt, einschließt,
sich die äußere Rillenkante (10) und die innere Rillenkante (12) linear parallel zur Reifenumfangsrichtung erstrecken,
sich die innere Rillenwand (13) in der Reifenumfangsrichtung erstreckt und dabei einen Neigungswinkel (θ1) relativ zu einer Laufflächennormalen (n) ändert, die durch die innere Rillenkante (12) verläuft, und
der Neigungswinkel (θ1) der inneren Rillenwand (13) periodisch zu- und abnimmt,
**dadurch gekennzeichnet, dass** die äußere Rillenwand (11) sich in der Reifenumfangsrichtung erstreckt, ohne einen Neigungswinkel (θ2) relativ zu einer Laufflächennormalen (n) zu ändern, die durch die äußere Rillenkante (10) verläuft.

2. Reifen (1) nach Anspruch 1, wobei
der Laufflächenabschnitt (2) einen ersten Schulterstegabschnitt (4A) zwischen dem ersten Laufflächenende (T1) und der ersten Schulterumfangsrille (3A) einschließt,
der erste Schulterstegabschnitt (4A) eine Vielzahl von Schulterquerrillen (25) mit Öffnungsenden (25k) einschließt, die mit der ersten Schulterumfangsrille (3A) verbunden sind,
sich eine Innenkante (13i) der inneren Rillenwand (13) in der Reifenradialrichtung in einem Zickzack- oder Wellenmuster erstreckt, so dass sie in einer Reifenaxialrichtung abwechselnd nach innen und außen vorsteht,
die Innenkante (13i) eine erste Position (P1) einschließt, an der die Innenkante (13i) in der Reifenaxialrichtung am weitesten von der inneren Rillenkante (12) entfernt ist, und
jedes der Öffnungsenden (25k) an einer Position bereitgestellt ist, die die erste Position (P1) entlang der Reifenumfangsrichtung überlappt.

3. Reifen (1) nach Anspruch 1 oder 2, wobei
eine Länge (W3) in der Reifenaxialrichtung jeder der Vielzahl von Schulterquerrillen (25) das 0,1- bis 0,5-Fache einer Stegabschnittsbreite (Ws) des ersten Schulterstegabschnitts (4A) beträgt, eine Rillentiefe (D3) jeder der Vielzahl von Schulterquerrillen (25) nicht weniger als das 0,1-Fache einer Rillentiefe (D1) der ersten Schulterumfangsrille (3A) beträgt und eine maximale Länge (Wf) in der Reifenumfangsrichtung jeder der Vielzahl von Schulterquerrillen (25) das 0,1- bis 0,5-Fache einer Teilungslänge (Ps) in der Reifenumfangsrichtung der in der Reifenumfangsrichtung nebeneinander liegenden Schulterquerrillen (25) beträgt.

4. Reifen (1) nach einem der Ansprüche 1 bis 3, wobei
die Vielzahl von Umfangsrillen (3) ferner eine Kronenumfangsrille (3B) neben der ersten Schulterumfangsrille (3A) einschließt,
die Kronenumfangsrille (3B) ein Paar Rillenkanten (17) und ein Paar Rillenwände (18), die sich jeweils von dem Paar Rillenkanten (17) in der Reifenradialrichtung nach innen erstrecken, einschließt,
sich das Paar Rillenkanten (17) linear parallel zur Reifenumfangsrichtung erstreckt,
sich das Paar Rillenwände (18) jeweils in der Reifenumfangsrichtung erstreckt, während es einen Neigungswinkel (θ3) relativ zu einer Laufflächennormalen (n) ändert, die durch jede Rillenkante (17) verläuft, und
der Neigungswinkel (θ3) jeder des Paares Rillenwände (18) periodisch zu- und abnimmt.

5. Reifen (1) nach Anspruch 4, wobei
sich eine Innenkante (18i) jeder des Paares Rillenwände (18) in der Reifenradialrichtung in einem Zickzack- oder Wellenmuster erstreckt, so dass sie in der Reifenaxialrichtung abwechselnd nach innen und außen vorsteht,
die Innenkante (18i) jeder des Paares Rillenwände (18) eine dritte Position (P3), an der die Innenkante (18i) in der Reifenaxialrichtung am weitesten von der Rillenkante (17) entfernt ist, und eine vierte Position (P4), an der die Innenkante (18i) in der Reifenaxialrichtung der Rillenkante (17) am nächsten ist, einschließt, und
ein Abstand (Lb) in der Reifenaxialrichtung zwischen der dritten Position (P3) und der vierten Position (P4) das 0,3- bis 0,7-Fache einer Rillenbreite (W2) der Kronenumfangsrille (3B) beträgt.

6. Reifen (1) nach Anspruch 5, wobei
der Laufflächenabschnitt (2) einen ersten Kronenstegabschnitt (5A) zwischen der Kronenumfangsrille (3B) und der ersten Schulterumfangsrille (3A) einschließt,
das Paar Rillenwände (18) der Kronenumfangsrille (3B) eine erste Rillenwand (18A) einschließt, die sich auf der Seite des ersten Kronenstegabschnitts (5A) befindet,
die Innenkante (18i) jeder des Paars Rillenwände (18) eine Eins-Wellenlänge (λ2) des Zickzack- oder Wellenmusters aufweist,
der erste Kronenstegabschnitt (5A) eine Vielzahl von Lamellen (30) einschließt, die sich in der Reifenaxialrichtung erstrecken, und
ein der Seite der ersten Rillenwand (18A) am nächsten liegendes Ende (30e) jeder der Vielzahl von Lamellen (30) von der vierten Position (P4) der ersten Rillenwand (18A) in der Reifenumfangsrichtung um 25 % oder mehr der Eins-Wellenlänge (λ2) der Innenkante (18i) der ersten Rillenwand (18A) getrennt ist.

7. Reifen (1) nach Anspruch 6, wobei
eine Länge (W6) in der Reifenaxialrichtung jeder der Vielzahl von Lamellen (30) nicht weniger als das 0,6-Fache einer Stegabschnittsbreite (Wc) des ersten Kronenstegabschnitts (5A) beträgt,
eine Tiefe (D4) jeder der Vielzahl von Lamellen (30) nicht weniger als das 0,2-Fache der Rillentiefe (D1) der ersten Schulterumfangsrille (3A) beträgt und
ein Winkel (α1) jeder der Vielzahl von Lamellen (30) relativ zur Reifenaxialrichtung 30 bis 60 Grad beträgt.

8. Reifen (1) nach Anspruch 6 oder 7, wobei
das Paar Rillenwände (18) der Kronenumfangsrille (3B) eine zweite Rillenwand (18B) einschließt, die zu der ersten Rillenwand (18A) weist,
sich die dritte Position (P3) der ersten Rillenwand (18A) und die vierte Position (P4) der zweiten Rillenwand (18B) in der Reifenumfangsrichtung an derselben Position befinden und
sich die vierte Position (P4) der ersten Rillenwand (18A) und die dritte Position (P3) der zweiten Rillenwand (18B) in der Reifenumfangsrichtung an derselben Position befinden.

9. Reifen (1) nach einem der Ansprüche 6 bis 8, wobei
ein inneres Ende in der Reifenradialrichtung der inneren Rillenwand (13) eine erste Position (P1), an der die Innenkante (13i) in der Reifenaxialrichtung am weitesten von der inneren Rillenkante (12) entfernt ist, und eine zweite Position (P2), an der die Innenkante (13i) in der Reifenaxialrichtung der inneren Rillenkante (12) am nächsten ist, einschließt,
die erste Position (P1) eine Position in der Reifenumfangsrichtung ist, die sich von der dritten Position (P3) der ersten Rillenwand (18A) und der vierten Position (P4) der ersten Rillenwand (18A) unterscheidet, und
die zweite Position (P2) eine Position in der Reifenumfangsrichtung ist, die sich von der dritten Position (P3) der ersten Rillenwand (18A) und der vierten Position (P4) der ersten Rillenwand (18A) unterscheidet.

10. Reifen (1) nach Anspruch 9, wobei
sich die erste Position (P1) in einer Mitte (Co) in der Reifenumfangsrichtung zwischen der dritten Position (P3) der ersten Rillenwand (18A) und der vierten Position (P4) der ersten Rillenwand (18A) befindet und
sich die zweite Position (P2) in der Mitte (Co) in der Reifenumfangsrichtung zwischen der dritten Position (P3) der ersten Rillenwand (18A) und der vierten Position der ersten Rillenwand (18A) befindet.

## Revendications

1. Pneu (1) comprenant une partie bande de roulement (2), dans lequel
la partie bande de roulement (2) comporte une première extrémité de bande de roulement (T1), et une pluralité de rainures circonférentielles (3) s'étendant de façon continue dans une direction circonférentielle de pneu,
la pluralité de rainures circonférentielles (3) comportent une première rainure circonférentielle d'épaulement (3A) disposée la plus proche de la première extrémité de bande de roulement (T1),
la première rainure circonférentielle d'épaulement (3A) comporte un bord externe de rainure (10) localisé sur le côté de la première extrémité de bande de roulement (T1), une paroi externe de rainure (11) s'étendant vers l'intérieur dans une direction radiale de pneu à partir du bord externe de rainure (10), un bord interne de rainure (12) localisé sur un côté opposé au bord externe de rainure (10), et une paroi interne de rainure (13) s'étendant vers l'intérieur dans la direction radiale de pneu à partir du bord interne de rainure (12),
le bord externe de rainure (10) et le bord interne de rainure (12) s'étendent linéairement parallèles à la direction circonférentielle de pneu,
la paroi interne de rainure (13) s'étend dans la direction circonférentielle de pneu tout en changeant d'angle d'inclinaison (θ1) par rapport à une ligne normale de bande de roulement (n) passant à travers le bord interne de rainure (12), et
l'angle d'inclinaison (θ1) de la paroi interne de rainure (13) augmente et diminue périodiquement,
**caractérisé en ce que** la paroi externe de rainure (11) s'étend dans la direction circonférentielle de pneu sans changer d'angle d'inclinaison (θ2) par rapport à une ligne normale de bande de roulement (n) passant à travers le bord externe de rainure (10).

2. Pneu (1) selon la revendication 1, dans lequel
la partie bande de roulement (2) comporte une première partie plane d'épaulement (4A) entre la première extrémité de bande de roulement (T1) et la première rainure circonférentielle d'épaulement (3A),
la première partie plane d'épaulement (4A) comporte une pluralité de rainures latérales d'épaulement (25) avec des extrémités d'ouverture (25k) reliées à la première rainure circonférentielle d'épaulement (3A),
un bord interne (13i) dans la direction radiale de pneu de la paroi interne de rainure (13) s'étend dans un motif en zigzag ou ondulé de façon à faire saillie en alternance vers l'intérieur et vers l'extérieur dans une direction axiale de pneu,
le bord interne (13i) comporte une première position (P1) où le bord interne (13i) est le plus séparé du bord interne de rainure (12) dans la direction axiale de pneu, et
chacune des extrémités d'ouverture (25k) est fournie à une position chevauchant la première position (P1) le long de la direction circonférentielle de pneu.

3. Pneu (1) selon la revendication 1 ou 2, dans lequel
une longueur (W3) dans la direction axiale de pneu de chacune parmi la pluralité de rainures latérales d'épaulement (25) vaut 0,1 à 0,5 fois une largeur de partie plane (Ws) de la première partie plane d'épaulement (4A), une profondeur de rainure (D3) de chacune parmi la pluralité de rainures latérales d'épaulement (25) n'est pas inférieure à 0,1 fois une profondeur de rainure (D1) de la première rainure circonférentielle d'épaulement (3A), et une longueur maximale (Wf) dans la direction circonférentielle de pneu de chacune parmi la pluralité de rainures latérales d'épaulement (25) vaut 0,1 à 0,5 fois une longueur de pas (Ps) dans la direction circonférentielle de pneu des rainures latérales d'épaulement (25) adjacentes les unes aux autres dans la direction circonférentielle de pneu.

4. Pneu (1) selon l'une quelconque des revendications 1 à 3, dans lequel
la pluralité de rainures circonférentielles (3) comportent en outre une rainure circonférentielle de ceinture (3B) adjacente à la première rainure circonférentielle d'épaulement (3A),
la rainure circonférentielle de ceinture (3B) comporte une paire de bords de rainure (17), et une paire de parois de rainure (18) s'étendant respectivement vers l'intérieur dans la direction radiale de pneu à partir de la paire de bords de rainure (17),
la paire de bords de rainure (17) s'étendent linéairement parallèles à la direction circonférentielle de pneu,
la paire de parois de rainure (18) s'étendent chacune dans la direction circonférentielle de pneu tout en changeant d'angle d'inclinaison (θ3) par rapport à une ligne normale de bande de roulement (n) passant à travers chaque bord de rainure (17), et
l'angle d'inclinaison (θ3) de chacune parmi la paire de parois de rainure (18) augmente et diminue périodiquement.

5. Pneu (1) selon la revendication 4, dans lequel
un bord interne (18i) dans la direction radiale de pneu de chacune parmi la paire de parois de rainure (18) s'étend dans un motif en zigzag ou ondulé de façon à faire saillie en alternance vers l'intérieur et vers l'extérieur dans la direction axiale de pneu,
le bord interne (18i) de chacune parmi la paire de parois de rainure (18) comporte une troisième position (P3) où le bord interne (18i) est le plus séparé du bord de rainure (17) dans la direction axiale de pneu, et une quatrième position (P4) où le bord interne (18i) est le plus proche du bord de rainure (17) dans la direction axiale de pneu, et
une distance (Lb) dans la direction axiale de pneu entre la troisième position (P3) et la quatrième position (P4) vaut 0,3 à 0,7 fois une largeur de rainure (W2) de la rainure circonférentielle de ceinture (3B).

6. Pneu (1) selon la revendication 5, dans lequel
la partie bande de roulement (2) comporte une première partie plane de ceinture (5A) entre la rainure circonférentielle de ceinture (3B) et la première rainure circonférentielle d'épaulement (3A),
la paire de parois de rainure (18) de la rainure circonférentielle de ceinture (3B) comportent une première paroi de rainure (18A) localisée sur le côté de la première partie plane de ceinture (5A),
le bord interne (18i) de chacune parmi la paire de parois de rainure (18) a une longueur d'onde (λ2) du motif en zigzag ou ondulé,
la première partie plane de ceinture (5A) comporte une pluralité de lamelles (30) s'étendant dans la direction axiale de pneu, et
une extrémité (30e), la plus proche du côté de la première paroi de rainure (18A), de chacune parmi la pluralité de lamelles (30) est séparée de la quatrième position (P4) de la première paroi de rainure (18A) dans la direction circonférentielle de pneu, de 25 % ou plus de la longueur d'onde (λ2) précitée du bord interne (18i) de la première paroi de rainure (18A).

7. Pneu (1) selon la revendication 6, dans lequel
une longueur (W6) dans la direction axiale de pneu de chacune parmi la pluralité de lamelles (30) n'est pas inférieure à 0,6 fois une largeur de partie plane (Wc) de la première partie plane de ceinture (5A),
une profondeur (D4) de chacune parmi la pluralité de lamelles (30) n'est pas inférieure à 0,2 fois la profondeur de rainure (D1) de la première rainure circonférentielle d'épaulement (3A), et
un angle (α1) de chacune parmi la pluralité de lamelles (30) par rapport à la direction axiale de pneu va de 30 à 60 degrés.

8. Pneu (1) selon la revendication 6 ou 7, dans lequel
la paire de parois de rainure (18) de la rainure circonférentielle de ceinture (3B) comportent une seconde paroi de rainure (18B) faisant face vers la première paroi de rainure (18A),
la troisième position (P3) de la première paroi de rainure (18A) et la quatrième position (P4) de la seconde paroi de rainure (18B) sont localisées à la même position dans la direction circonférentielle de pneu, et
la quatrième position (P4) de la première paroi de rainure (18A) et la troisième position (P3) de la seconde paroi de rainure (18B) sont localisées à la même position dans la direction circonférentielle de pneu.

9. Pneu (1) selon l'une quelconque des revendications 6 à 8, dans lequel
une extrémité interne dans la direction radiale de pneu de la paroi interne de rainure (13) comporte une première position (P1) où le bord interne (13i) est le plus séparé du bord interne de rainure (12) dans la direction axiale de pneu, et une deuxième position (P2) où le bord interne (13i) est le plus proche du bord interne de rainure (12) dans la direction axiale de pneu,
la première position (P1) est une position, dans la direction circonférentielle de pneu, différente de la troisième position (P3) de la première paroi de rainure (18A) et de la quatrième position (P4) de la première paroi de rainure (18A), et
la deuxième position (P2) est une position, dans la direction circonférentielle de pneu, différente de la troisième position (P3) de la première paroi de rainure (18A) et de la quatrième position (P4) de la première paroi de rainure (18A).

10. Pneu (1) selon la revendication 9, dans lequel
la première position (P1) est localisée au niveau d'un milieu (Co) dans la direction circonférentielle de pneu entre la troisième position (P3) de la première paroi de rainure (18A) et la quatrième position (P4) de la première paroi de rainure (18A), et
la deuxième position (P2) est localisée au milieu (Co) dans la direction circonférentielle de pneu entre la troisième position (P3) de la première paroi de rainure (18A) et la quatrième position de la première paroi de rainure (18A).
